# EUROPEAN PATENT APPLICATION

(11) **EP 4 287 696 A1**
(43) Date of publication of application: **06.12.2023**
(21) Application number: 21922773.3
(22) Date of filing: 26.01.2021
(51) Int. Cl.: H04W 24/10, H04W 52/02

(54) **TERMINAL, BASE STATION, AND WIRELESS COMMUNICATION METHOD**

(71) Applicant: NTT DOCOMO, INC., Tokyo 100-6150 (JP)
(72) Inventor: HARADA Hiroki, Tokyo 100-6150 (JP); KURITA Daisuke, Tokyo 100-6150 (JP); OKANO Mayuko, Tokyo 100-6150 (JP); NAGATA Satoshi, Tokyo 100-6150 (JP); OKAMURA Masaya, Tokyo 100-6150 (JP); OHARA Tomoya, Tokyo 100-6150 (JP)
(74) Representative: Hoffmann Eitle
(86) International application number: PCT/JP2021/002694
(87) International publication number: WO 2022/162749

(57) **Abstract**

A terminal comprising: a reception unit that receives a reference signal periodically transmitted from a network; a transmission unit that transmits a measurement result of the reference signal; and a control unit that determines whether or not to assume a reception of at least a part of the reference signal based on whether or not a specific condition is satisfied.

## Description

### [Technical Field]

The present disclosure relates to a terminal, a base station, and a radio communication method for performing radio communication, and more particularly, to a terminal, a base station, and a radio communication method for performing communication concerning a reference signal.

### [Background Art]

The 3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Here, the gNB (cell) transmits a reference signal that covers the coverage area of the gNB. The reference signal may be SSB (Synchronization Signal/PBCH Block), CSI-RS (Channel State Information-Reference Signal), or PRS (Positioning Reference Signal) (For example, Non-Patent Literature 1).

### [Citation List]

### [Non-Patent Literature]

[Non-Patent Literature 1]
3GPP TS 38.211 V 16.4.0 "3rd Generation Partnership Project; Technical Specification Group Radio Access Network; NR; Physical channels and modulation (Release 16), December 2020

### [Summary of Invention]

The UE (User Equipment) assumes that a reference signal is periodically transmitted from the gNB. As a reference signal periodically transmitted, a reference signal (Synchronization Signal Block (SSB), Periodic CSI-RS (Channel State Indicator-Reference Signal)) used in RRM (Radio Resource Management) measurement can be considered. On the other hand, it is desirable for the UE to reduce the overhead and power consumption associated with the reception of periodically transmitted reference signals.

It is therefore an object of the following disclosure to provide a terminal, a base station, and a radio communication method capable of reducing the overhead and power consumption associated with the reception of a reference signal while appropriately executing processing using the measurement result of the reference signal.

An aspect of the present disclosure is a terminal comprising: a reception unit that receives a reference signal periodically transmitted from a network; a transmission unit that transmits a measurement result of the reference signal; and a control unit that determines whether or not to assume a reception of at least a part of the reference signal based on whether or not a specific condition is satisfied.

An aspect of the present disclosure is a base station comprising: a transmission unit that transmits reference signal periodically, a reception unit that receives a measurement result of the reference signal; and a control unit that determines whether or not to assume a reception of at least a part of the measurement result based on whether or not a specific condition is satisfied.

An aspect of the present disclosure is a radio communication method comprising: receiving a reference signal periodically transmitted from a network; transmitting a measurement result of the reference signal; and determining whether or not to assume a reception of at least a part of the reference signal based on whether or not a specific condition is satisfied.

### [Brief Description of Drawings]

[Fig. 1] FIG. 1 is an overall schematic diagram of a radio communication system 10.
[Fig. 2] FIG. 2 is a diagram illustrating the frequency range used in radio communication system 10.
[Fig.3] FIG. 3 shows an exemplary configuration of a radio frame, subframe, and slot used in a radio communication system 10.
[Fig.4] FIG. 4 is a functional block diagram of the UE 200.
[Fig.5] FIG. 5 is a functional block diagram of the gNB 100.
[Fig.6] FIG. 6 is a background view.
[Fig.7] FIG. 7 is a diagram for explaining an example of operation.
[Fig.8] FIG. 8 shows an example of a hardware configuration of the gNB 100 and the UE 200.

### [Description of Embodiments]

Exemplary embodiments of the present invention are explained below with reference to the accompanying drawings. Note that, the same or similar reference numerals have been attached to the same functions and configurations, and the description thereof is appropriately omitted.

### [Embodiments]

### (1)Overall schematic configuration of the radio communication system

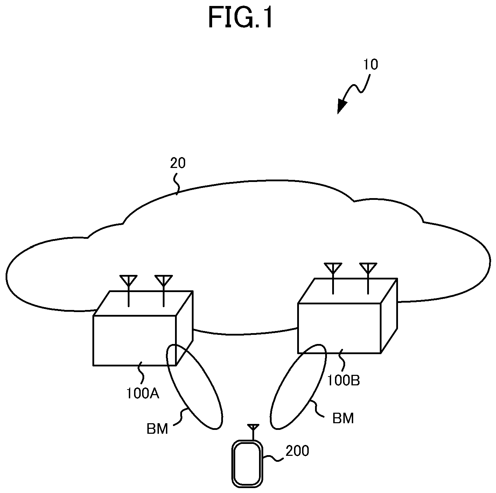

FIG. 1 is an overall schematic configuration diagram of a radio communication system 10 according to an embodiment. The radio communication system 10 is a 5G New Radio (NR) compliant radio communication system and includes the Next Generation-Radio Access Network 20 (Below, UE 200), NG-RAN 20, and terminal 200.

The radio communication system 10 may be a radio communication system that follows a scheme called Beyond 5G, 5G Evolution or 6 G.

The NG-RAN 20 includes a radio base station 100 A (gNB 100 A) and a radio base station 100 B (gNB 100 B). The specific configuration of radio communication system 10 including the number of gNBs and UEs is not limited to the example shown in FIG. 1.

The NG-RAN 20 actually includes a plurality of NG-RAN Nodes, specifically, gNBs (or ng-eNBs), and is connected to a core network (5GC, not shown) according to 5 G or 6 G. Note that the NG-RAN 20 and 5 GC may be expressed simply as a "network ".

The gNB 100 A and the gNB 100 B are radio base stations according to 5G or 6G, and perform radio communication according to 5G or 6G with the UE 200. By controlling radio signals transmitted from a plurality of antenna elements, the gNB 100 A, the gNB 100 B, and the UE 200 can support Massive MIMO (Multiple-Input Multiple-Output) for generating a beam BM having a higher directivity, carrier aggregation (CA) for bundling a plurality of component carriers (CC), and dual connectivity (DC) for communicating with two or more transport blocks simultaneously between the UE and each of the two NG-RAN Nodes.

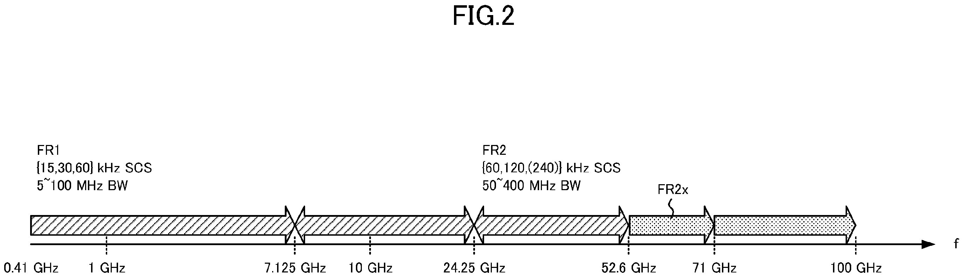

The radio communication system 10 corresponds to a plurality of frequency ranges (FR). FIG. 2 shows the frequency range used in radio communication system 10.

As shown in FIG. 2, the radio communication system 10 corresponds to FR1 and FR2. The frequency bands of each FR are as follows.
▪ FR 1: 410 MHz to 7.125 GHz
▪ FR 2: 24.25 GHz to 52.6 GHz

In FR 1, 15, 30 or 60 kHz Sub-Carrier Spacing (SCS) may be used and a 5 ~ 100 MHz bandwidth (BW) may be used. FR 2 is a higher frequency than FR 1, and an SCS of 60 or 120 kHz (240 kHz may be included) may be used, and a bandwidth (BW) of 50 ~ 400 MHz may be used.

The SCS may be interpreted as numerology. Numerology is defined in 3 GPP TS 38.300 and corresponds to one subcarrier interval in the frequency domain.

Furthermore, the radio communication system 10 also supports higher frequency bands than the FR 2 frequency band. Specifically, the radio communication system 10 supports the frequency band above 52.6 GHz up to 114.25 GHz. Such a high frequency band may be referred to as "FR2x" for convenience.

To solve this problem, when using a band above 52.6 GHz, cyclic prefix-orthogonal frequency division multiplexing (CP-OFDM)/discrete Fourier transform-spread (DFT-S-OFDM) with larger sub-carrier spacing (SCS) may be applied.

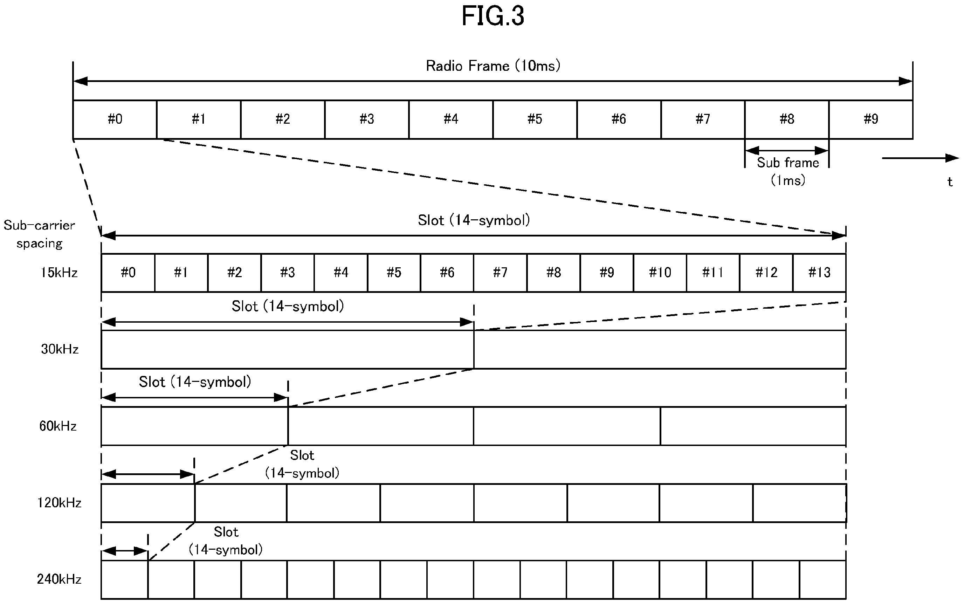

FIG. 3 shows a configuration example of a radio frame, a sub-frame and a slot used in radio communication system 10.

As shown in FIG. 3, one slot comprises 14 symbols, and the larger (wider) the SCS, the shorter the symbol period (and the slot period). The SCS is not limited to the spacing (frequency) shown in FIG. 3. For example, 480 kHz, 960 kHz, and the like may be used.

The number of symbols constituting 1 slot is not necessarily 14 (For example, 28, 56 symbols). Furthermore, the number of slots per subframe may vary depending on the SCS.

The time direction (t) shown in FIG. 3 may be referred to as a time region, a symbol period or a symbol time. The frequency direction may be referred to as a frequency domain, a resource block, a subcarrier, a bandwidth part (BWP), or the like.

### (2)Function block configuration of radio communication system

Next, the functional block configuration of radio communication system 10 will be described.

First, the functional block configuration of the UE 200 will be described.

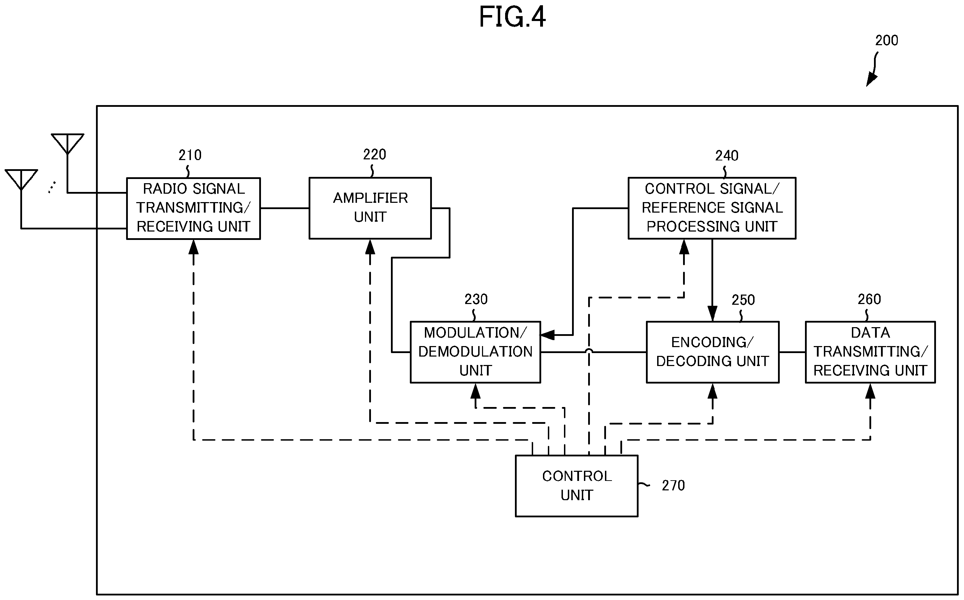

FIG. 4 is a functional block diagram of the UE 200. As shown in FIG. 4, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260 and a control unit 270.

The radio signal transmission/reception unit 210 transmits and receives radio signals in accordance with NR or 6 G. radio signal transmission/reception unit 210 supports Massive MIMO, CA with multiple CCs bundled together, and DC with simultaneous communication between the UE and each of the 2 NG-RAN Nodes.

The amplifier unit 220 is composed of a PA (Power Amplifier)/LNA (Low Noise Amplifier) and the like. The amplifier unit 220 amplifies the signal output from modulation/demodulation unit 230 to a predetermined power level. The amplifier unit 220 also amplifies the RF signal output from radio signal transmission/reception unit 210.

The modulation/demodulation unit 230 performs data modulation/demodulation, transmission power setting, resource block allocation and the like for each predetermined communication destination (gNB 100 or other gNB). In modulation/demodulation unit 230, Cyclic Prefix-Orthogonal Frequency Division Multiplexing (CP-OFDM)/Discrete Fourier Transform-Spread (DFT-S-OFDM) may be applied. The DFT-S-OFDM may be used not only in the uplink (UL) but also in the downlink (DL).

The control signal/reference signal processing unit 240 executes processing relating to various control signals transmitted and received by the UE 200 and processing relating to various reference signals transmitted and received by the UE 200.

First, the control signal/reference signal processing unit 240 receives various control signals transmitted from the gNB 100. For example, the various control signals may include RRC control signals, DCI (Downlink Control Information), and MAC CE control signals. The control signal/reference signal processing unit 240 transmits various control signals to the gNB 100 through the control channel. For example, the various control signals may include RRC control signals, UCI (Uplink Control Information), and MAC CE control signals. The DCI may include fields that store existing fields such as DCI Formats, Carrier Indicator (CI), BWP Indicator, FDRA (Frequency Domain Resource Allocation), TDRA (Time Domain Resource Allocation), MCS (Modulation and Coding Scheme), HPN (HARQ Process Number), NDI (New Data Indicator), and RV (Redundancy Version).

The value stored in the DCI Format field is an information element that specifies the format of the DCI. The value stored in the CI field is an information element that specifies the CC to which the DCI applies. The value stored in the BWP indicator field is an information element that specifies the BWP to which the DCI applies. The BWP that can be specified by the BWP indicator is set by the information element (BandwidthPart-Config) contained in the RRC message. The value stored in the FDRA field is an information element that specifies the frequency domain resource to which the DCI applies. The frequency domain resource is specified by a value stored in the FDRA field and an information element (RA Type) contained in the RRC message. The value stored in the TDRA field is an information element that specifies the time domain resource to which the DCI applies. The time domain resource is specified by a value stored in the TDRA field and an information element (pdsch-TimeDomainAllocationList, pusch-TimeDomainAllocationList) contained in the RRC message. The time domain resource may be specified by a value stored in the TDRA field and a default table. The value stored in the MCS field is an information element that specifies the MCS to which the DCI applies. The MCS is specified by the values stored in the MCS and the MCS table. The MCS table may be specified by an RRC message or specified by RNTI scrambling. The value stored in the HPN field is an information element that specifies the HARQ Process to which the DCI applies. The value stored in the NDI is an information element for specifying whether or not the data to which the DCI is applied is the first transmission data. The value stored in the RV field is an information element that specifies the redundancy of the data to which the DCI applies.

Second, the control signal/reference signal processing unit 240 receives various reference signals transmitted from the gNB 100. For example, the various reference signals may include DMRS, CSI-RS (Channel State Information-Reference Signal), PRS (Positioning Reference Signal), and PTRS (Phase Tracking Reference Signal) for DL. The SSB (Synchronization Signal/PBCH Block) may be considered as a kind of reference signal. control signal/reference signal processing unit 240 transmits various reference signals to the gNB 100. For example, the various reference signals may include DMRS for UL, PTRS for UL, Sounding Reference Signal (SRS), and the like.

The DMRS for DL is a known sequence of 200 UEs used for demodulation of data. For example, DMRS for DL is used for decoding PDSCH (Physical Downlink Shared Channel).

The CSI-RS is a known sequence of 200 UEs used for channel state estimation. The CSI-RS may include periodic CSI-RS that are transmitted periodically, semi-persistent CSI-RS that are transmitted semi-persistently, or Aperiodic CSI-RS that are transmitted dynamically.

The PRS is a known sequence of 200 UEs used for terminal positioning. For the position measurement of the terminal, PRSRP (Reference Signal Reception Power), RSTD (Reference Signal Time Difference), Rx-Tx Time Difference, etc. are specified. The PRS is a reference signal that is periodically transmitted.

The PTRS for DL is a known sequence of 200 UEs used for estimating phase noise which is a problem in a high frequency band. For example, the PTRS for DL is used to estimate the phase noise of the PDSCH.

The DMRS for UL is a known sequence of 200 UEs used for demodulation of data. For example, DMRS for UL is used for decoding PUSCH (Physical Uplink Shared Channel).

The PTRS for UL is a known sequence of 200 UEs used to estimate phase noise which is a problem in a high frequency band. For example, the PTRS for UL is used to estimate the phase noise of the PUSCH.

The SRS is a known sequence of 200 UEs used for channel state estimation. SRS is used for scheduling, massive MIMO, beam management, etc. The SRS may be used to measure the position of the terminal.

The channel includes a control channel and a data channel. The control channel includes a PDCCH (Physical Downlink Control Channel), a PUCCH (Physical Uplink Control Channel), a RACH (Random Access Channel), a Physical Broadcast Channel (PBCH), and the like. The data channel includes PDSCH, PUSCH and the like. Data means data transmitted over a data channel. The data channel may be read as a shared channel.

In an embodiment, the control signal/reference signal processing unit 240 constitutes a reception unit for receiving a reference signal (hereinafter, periodic RS) periodically transmitted from the NG RAN 20 (gNB 100). The control signal/reference signal processing unit 240 constitutes transmission unit for transmitting the measurement results of the periodic RS.

The encoding/decoding unit 250 executes data division/connection, channel coding/decoding and the like for each predetermined communication destination (gNB 100 or other gNB).

Specifically, encoding/decoding unit 250 divides the data output from data transmission/reception unit 260 into predetermined sizes, and executes channel coding on the divided data. The encoding/decoding unit 250 decodes the data output from modulation/demodulation unit 230 and connects the decoded data.

The data transmission/reception unit 260 sends and receives protocol data units (PDU) and service data units (SDU). Specifically, data transmission/reception unit 260 performs assembly/disassembly of PDUs/SDUs in a plurality of layers (Media access control layer (MAC), wireless link control layer (RLC), and packet data convergence protocol layer (PDCP), etc.). The data transmission/reception unit 260 executes error correction and retransmission control of the data based on the HARQ (Hybrid Automatic Repeat Request).

The control unit 270 controls each functional block constituting the UE 200. In an embodiment, the control unit 270 determines whether to assume reception of at least a part of the periodic RS based on whether a specific condition is satisfied. The control unit 270 performs measurements (such as reception quality) on the periodic RS. The operation of not assuming the reception of the periodic RS may be read as the operation of skipping the reception of the periodic RS, the operation of skipping the measurement concerning the periodic RS, and the operation of skipping the transmission of the measurement result of the periodic RS.

Next, the functional block configuration of the gNB 100 will be described.

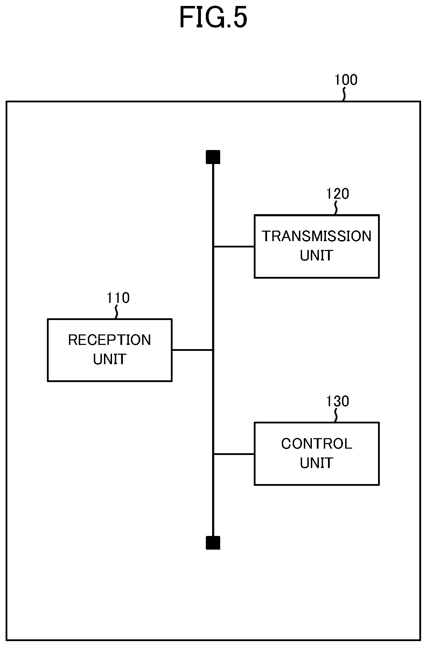

FIG. 5 is a functional block diagram of the gNB 100. As shown in FIG. 5, the gNB 100 has a reception unit 110, a transmission unit 120 and a control unit 130.

The reception unit 110 receives various signals from the UE 200. The reception unit 110 may receive UL signals over a UL channel such as PUCCH or PUSCH. In an embodiment, reception unit 110 comprises a reception unit that receives periodic RS measurements.

The transmission unit 120 transmits various signals to the UE 200. The transmission unit 120 may transmit a DL signal over a DL channel, such as PDCCH or PDSCH. In an embodiment, transmission unit 120 constitutes a transmission unit that transmits a periodic RS.

The control unit 130 controls the gNB 100. In an embodiment, the control unit 130 constitutes a control unit that determines whether or not to assume reception of a measurement result based on whether or not a specific condition is satisfied. The operation not assuming the reception of the measurement result may be read as the operation assuming that the UE 200 omits the reception of the periodic RS, the operation assuming that the UE 200 omits the measurement relating to the periodic RS, and the operation assuming that the UE 200 omits the transmission of the measurement result.

### (3)Background

The background of the embodiment will be described below. Here, a reference signal (hereinafter, periodic RS) periodically transmitted for a specific purpose will be described by way of example.

The specific purpose may be measurement (Below, RRM Measurement) for radio resource management (Below, RRM). In such cases, the periodic RS may be an SSB or a Periodic CSI-RS. The periodic RS may be a cell-specific reference signal (CRS) in LTE.

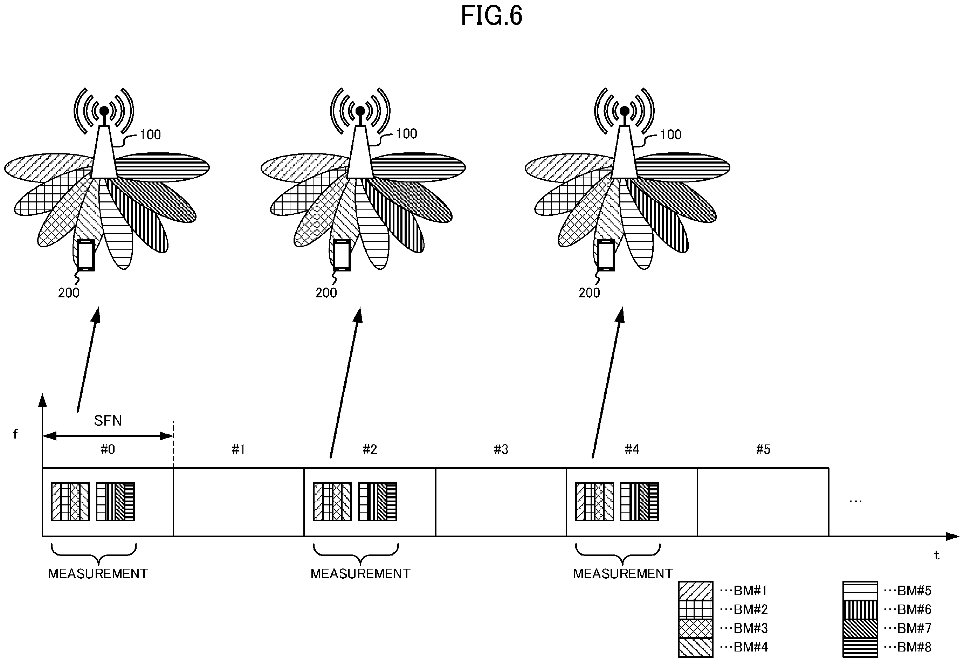

For example, as shown in FIG. 6, the periodic RS may be configured to be transmitted at a period of, for example, 20 msec. In such a case, the periodic RS may be transmitted in time division using each beam (BM # 1 to BM # 8) to cover the coverage area of the gNB 100 (cell). For example, the gNB 100 transmits periodic RS in time division by using BM # 1 to BM # 8 in SFN # 0, SFN # 2 and SFN # 4 ....

For example, the UE 200 receives the periodic RS transmitted using the BM # 4 at the SFN # 0, SFN # 2, and SFN # 4..., and transmits the measurement result of the periodic RS to the gNB 100.

Against this background, it is preferable for the UE 200 to reduce power consumption and overhead of receiving the periodic RS (and measuring the periodic RS).

Therefore, in the embodiment, the following mechanism is newly introduced in order to reduce power consumption and overhead of the UE 200.

### (4)Operation example

An operation example of the embodiment will be described below. In the operation example, a reference signal for RRM measurement is exemplified as a periodic RS.

The UE 200 determines whether or not reception of at least a part of the periodic RS is assumed based on whether or not a specific condition is satisfied. The gNB 100 determines whether to assume the reception of the measurement result based on whether or not the specific condition is satisfied.

In the following description, it is assumed that the specific condition is a condition that does not assume the reception of at least a part of the periodic RS (following, optional conditions). That is, when the omission condition is satisfied, the UE 200 omits at least a part of the reception of the periodic RS without assuming at least a part of the reception of the periodic RS. In accordance with the omission of the reception of the periodic RS, the UE 200 omits the measurement of the periodic RS and omits the transmission of the measurement report. In other words, the gNB 100 executes an operation which does not assume the reception of the measurement result.

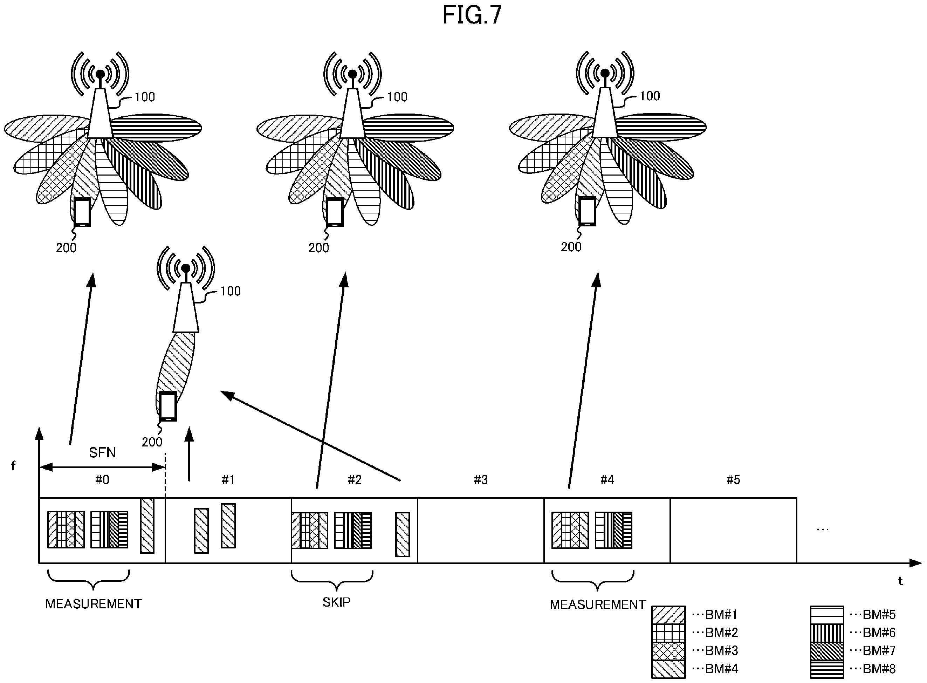

For example, as shown in FIG. 7, a case where communication is executed between the gNB 100 and the UE 200 in SFN # 0 and SFN # 1 will be considered. In such a case, if the omission condition is satisfied, the UE 200 may skip the reception of the periodic RS in the SFN # 2. Therefore, the gNB 200 does not assume the reception of the measurement result of the periodic RS transmitted by the SFN # 2.

### (4.1) Optional conditions

The abbreviated conditions of the embodiment will be described below. The omission condition may include a condition defined by whether one or more operations selected from among transmission of uplink data (UL Data), reception of downlink data (DL data), transmission of uplink reference signal (Hereinafter, UL reference signal), reporting of reception acknowledgment (Following is HARQ-ACK.), and reporting of channel status indicator (CSI Report) are performed within a specific period.

The start timing of the specific period may be a timing at which measurement reports (transmission of measurement results) relating to the previous RRM measurement are executed or a timing at which measurements relating to the previous RRM measurement are executed. The timing for executing the measurement report may be Symbol for executing the measurement report or the beginning of Slot for executing the measurement report. The timing of performing the measurement for the RRM measurement may be Symbol performing the measurement for the RRM measurement, or it may be the beginning of Slot performing the measurement for the RRM measurement.

The end timing of the specific period may be a predetermined time prior to the timing of the next measurement for the RRM measurement. The predetermined time may be represented by a Symbol number, a Slot number, or an absolute time. The predetermined time may be a time set by the gNB 100. The predetermined time may be set by an RRC message or a MAC CE message. The predetermined time may be a time previously defined in radio communication system 10.

The specific period may be a time set by gNB 100. The specific time period may be set by an RRC message or a MAC CE message. The specific period may be a predefined time in radio communication system 10. The specific period may be represented by a Symbol number, a Slot number, or an absolute time.

The omission condition may be regarded as an omission condition for omitting the measurement for the RRM measurement. The omitted condition may be regarded as a condition under which the communication between the gNB 100 and the UE 200 is assumed to be good. The omitted condition may be regarded as a condition under which the UE 200 is assumed to be close to the center of the cell (gNB 100).

For example, the omission condition may include one or more conditions selected from the following conditions.

Condition 1 may include conditions under which transmission of UL data is performed within a specified period of time. Condition 1 may include a condition that the transmission power applied to the UL data is equal to or less than a predetermined threshold value (hereinafter Condition 1A). A condition that the number of retransmission requests for UL data is not more than a predetermined number (less than or equal to condition 1B) may be included. A condition in which the TCI (Transmission Configuration Indicator) state (QCL (Quasi-co-location) source) indicated in the transmission of UL data is other than the specified value specified by the gNB 100 or is the specified value specified by the gNB 100 (hereinafter Condition 1C) may be included. Condition 1 may include one or more conditions selected from conditions 1A to 1C.

Condition 2 may include conditions under which transmission of DL data is performed within a specified period of time. Condition 2 may include a condition that the number of retransmission requests for DL data is equal to or less than a predetermined number (hereinafter Condition 2A). A condition that the TCI state (QCL source) indicated in the transmission of the DL data is other than the specified value specified by the gNB 100 or a condition that is the specified value specified by the gNB 100 (less than or equal to condition 2B) may be included. Condition 2 may include one or more conditions selected from condition 2A and condition 2B.

Condition 3 may include a condition under which a HARQ-ACK report is performed within a specified period of time. Condition 3 may include a condition where the number of ACKs reported as HARQ-ACKs is greater than or equal to a threshold (hereinafter condition 3A). Condition 3 may include a condition in which the ratio of ACKs reported as HARQ-ACKs is equal to or greater than a threshold value (less than or equal to condition 3B). The ratio of ACKs may be expressed as a ratio to the total of HARQ-ACKs or as a ratio to NACKs reported as HARQ-ACKs. Condition 3 may include a condition in which the number of NACKs reported as HARQ-ACKs is less than or equal to a threshold value (hereinafter Condition 3C). Condition 3 may include a condition in which the ratio of NACKs reported as HARQ-ACKs is less than or equal to the threshold value (Less than or equal to condition 3D). The ratio of NACK may be expressed as a ratio to the total of HARQ-ACKs or as a ratio to ACKs reported as HARQ-ACKs. Condition 3 may include one or more conditions selected from Condition 3A to Condition 3D.

Condition 4 may include a condition under which a channel status indicator report is performed within a specific time period. Condition 4 may include a condition in which the CQI value included in the CSI report is equal to or greater than the threshold value (hereinafter Condition 4A). Condition 4 may include a condition in which the L1-RSRP value included in the CSI report is equal to or greater than the threshold value (hereinafter Condition 4B). Condition 4 may include one or more conditions selected from condition 4A and condition 4B.

Condition 5 may include conditions under which transmission of the UL reference signal is performed within a specified period of time. The UL reference signal may be an SRS, a DMRS for UL, or a PTRS for UL.

### (4.2) Network notifications

The following describes the notification from the network according to the embodiment. Based on the notification received from the NG RAN 20 (gNB 100), the UE 200 may perform an operation that does not assume the reception of at least a part of the periodic RS. Based on the notification to the UE 200, the gNB 100 may execute an operation that does not assume the reception of the measurement result. Such a notification may be regarded as a notification instructing the omission of periodic RS reception.

The notification received from NG RAN 20 may be an RRC message, a MAC CE message, or a DCI. The following options may be used as notifications received from NG RAN 20. One or more options selected from the following options may be applied:.

In option 1, the notification received from NG RAN 20 may be scheduling information including resource allocation for use in transmitting UL data or receiving DL data for at least a portion of the resources of the periodic RS.

In option 2, the notification received from the NG RAN 20 may be a notification specifying an allocation other than DL for a resource that includes at least a portion of the resources of the periodic RS. An SFI (Slot Format Indicator) may be used as such a notification. For example, the notification received from the NG RAN 20 may be an SFI specifying an assignment ("U " or" F ") other than "D " for a resource including at least a portion of the resources of the periodic RS. "D " means a resource used for DL," U " means a resource used for UL, and "F" means a resource usable for both DL and UL.

In option 3, the notification received from NG RAN 20 may be a new notification to indicate the omission of periodic RS reception.

Here, it may be considered that the UE 200 receiving the notification described in option 1 ~ 3 is a part of the above abbreviation condition.

### (4.3) Omission of Periodic RS

Hereinafter, the omission of the periodic RS according to the embodiment will be described. Specifically, an optional periodic RS will be described.

For example, the optional periodic RS may be a periodic RS that is received in a certain period of time after a certain period of time defining an optional condition. In other words, the UE 200 may omit receiving the periodic RS in a certain period after a certain period. A period of time may be set by an RRC message or a MAC CE message. The time period may be a predefined time period in radio communication system 10.

For example, the optional periodic RS may be a periodic RS of a certain number of times after a specific period defining the omission condition. In other words, the UE 200 may omit receiving a certain number of periodic RS after a certain period. The number of times may be set by the RRC message or the MAC CE message. The number of times may be a predefined time in radio communication system 10.

### (5)Function and effects

In an embodiment, the UE 200 determines whether or not to assume the reception of a periodic RS based on whether or not a specific condition is satisfied. According to such a configuration, the UE 200 does not always need to receive the periodic RS and to measure the periodic RS, and power consumption and overhead of the UE 200 can be reduced. By defining a specific condition for determining whether or not to assume the reception of the periodic RS, it is possible to appropriately execute processing (For example, RRM) using the measurement result of the periodic RS.

### (6)Other Embodiments

Although the contents of the present invention have been described in accordance with the embodiments described above, it is obvious to those skilled in the art that the present invention is not limited to these descriptions and that various modifications and improvements are possible.

In the above-described embodiment, the UE 200 may transmit capability information including an information element indicating whether or not it corresponds to the function of omitting the reception of a periodic RS to the NG RAN 20 (gNB 100). The UE 200 may transmit capability information for each wireless access technology (RAT), frequency range (FR), frequency band (Band) and SCS.

In the above-described embodiment, the gNB 100 may control the connection of the UE 200 that does not correspond to the function of omitting the reception of the periodic RS. For example, the gNB 100 may transmit notification information indicating that the connection of the UE 200 corresponding to the function of omitting the reception of the periodic RS is permitted. The broadcast information may include a MIB (Master Information Block) or a SIB (System Information Block).

In the above-described embodiment, a case has been described in which the specific condition is an omission condition for omitting the reception of the periodic RS (measurement of the periodic RS). However, the embodiment is not limited to this. For example, the specific condition may be an execution condition for executing the reception of the periodic RS (measurement for the periodic RS). In such a case, the UE 200 may assume the reception of periodic RS (measurement of periodic RS) when the execution condition is satisfied. The UE 200 may not assume the reception of the periodic RS (measurement of the periodic RS) when the execution condition is not satisfied. In other words, the gNB 100 may assume the reception of the measurement result when the execution condition is satisfied. The gNB 100 may not assume the reception of the measurement result when the execution condition is not satisfied.

In such a case, the execution condition may be regarded as a condition for performing the measurement for the RRM measurement. The execution condition may be a condition under which the communication between the gNB 100 and the UE 200 is assumed to be poor. The execution condition may be regarded as a condition under which the UE 200 is assumed to be close to the cell edge. As the execution condition, a condition opposite to the above-described omission condition can be used.

Further, both the abbreviation condition and the execution condition may be separately defined. In other words, the abbreviation condition and the execution condition may be defined in a manner having hysteresis. In such a case, the UE 200 may not assume the reception of the periodic RS until the execution condition is satisfied after the omission condition is satisfied. The UE 200 may not assume the reception of the periodic RS until the omission condition is satisfied after the execution condition is satisfied.

In the above embodiment, a case has been described where the periodic RS is a reference signal used in RRM measurement. However, the embodiment is not limited to this. The periodic RS may be a reference signal used for beam failure detection (BFD), a reference signal used for channel state indicator acquisition (CSI Acquisition), a reference signal used for L1-RSRP_SINR measurement at the physical layer, a reference signal used for positioning measurement of the UE 200, or a reference signal used for RLM measurement.

The block diagrams (FIGS. 4 and 5) used in the description of the above-described embodiment show blocks in units of functions. Those functional blocks (structural components) can be realized by a desired combination of at least one of hardware and software. Means for realizing each functional block is not particularly limited. That is, each functional block may be implemented using a physically or logically coupled device, or may be implemented using two or more physically or logically separated devices connected directly or indirectly (For example, by using wired, wireless, etc.). The functional block may be implemented by combining software with the one device or the plurality of devices.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions the transmission is called a transmission unit (transmitting unit) or a transmitter. As described above, there is no particular limitation on the method of implementation.

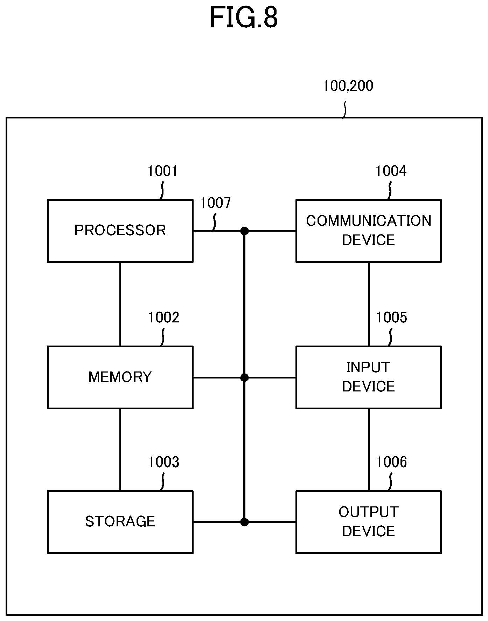

Further, the above-mentioned gNB 100 and UE 200 (the apparatus) may function as a computer that performs processing of the radio communication method of the present disclosure. FIG. 8 is a diagram showing an example of a hardware configuration of the apparatus. As shown in FIG. 8, the device may be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. The hardware configuration of the device may be configured to include one or more of the devices shown in the figure, or may be configured to exclude some of the devices.

Each functional block of the device (see FIG. 4) is implemented by any hardware element or combination of hardware elements of the computer device.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 operates, for example, an operating system to control the entire computer. Processor 1001 may comprise a central processing unit (CPU) including interfaces to peripheral devices, controllers, arithmetic units, registers, and the like.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Further, the various processes described above may be executed by one processor 1001, or may be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, or the like. The memory 1002 may store programs (program codes), software modules, and the like that are capable of executing the method according to one embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Devices such as the processor 1001 and the memory 1002 are connected by a bus 1007 for communicating information. The bus 1007 may be configured using a single bus or may be configured using different buses for each device.

In addition, the device may comprise hardware such as a microprocessor, a digital signal processor (DSP), an application specific integrated circuit (ASIC), a programmable logic device (PLD), a field programmable gate array (FPGA), and the hardware may implement some or all of each functional block. For example, the processor 1001 may be implemented by using at least one of these hardware.

Further, the notification of the information is not limited to the mode/embodiment described in the present disclosure, and other methods may be used. For example, notification of information may be performed by physical layer signaling (e.g., Downlink Control Information (DCI), Uplink Control Information (UCI), higher layer signaling (e.g., RRC signaling, Medium Access Control (MAC) signaling, broadcast information (Master Information Block (MIB), System Information Block (SIB)), other signals, or a combination thereof. The RRC signaling may also be referred to as an RRC message, for example, an RRC Connection Setup message, an RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each aspect/embodiment described in the present disclosure may be changed in order as long as there is no contradiction. For example, the methods described in this disclosure use an exemplary sequence to present the elements of the various steps and are not limited to the particular sequence presented.

The specific operation that is performed by the base station in the present disclosure may be performed by its upper node in some cases. In a network comprising one or more network nodes having a base station, it is apparent that various operations performed for communication with a terminal may be performed by the base station and at least one of other network nodes (For example, but not limited to MME or S-GW) other than the base station. In the above, an example in which there is one network node other than the base station is explained; however, a combination of a plurality of other network nodes (for example, MME and S-GW) may be used.

Information and signals (information, etc.) can be output from an upper layer (or a lower layer) to a lower layer (or an upper layer). It may be input and output via a plurality of network nodes.

The input/output information can be stored in a specific location (for example, a memory) or can be managed in a management table. The input and output information may be overwritten, updated, or appended. The information can be deleted after outputting. The inputted information can be transmitted to another device.

The determination may be made by a value represented by one bit (0 or 1), by a Boolean value (Boolean: true or false), or by a comparison of numerical values (For example, comparison with a given value).

Each of the aspects/embodiments described in the present disclosure may be used alone, in combination, or switched over in accordance with implementation. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, if software is transmitted from a website, server, or other remote source using at least one of wired (Coaxial cable, fiber-optic cable, twisted-pair, digital subscriber subscriber line (DSL), etc.) and wireless (Infrared, microwave, etc.) technologies, at least one of these wired and wireless technologies is included within the definition of a transmission medium.

Information, signals, or the like mentioned above may be represented by using any of a variety of different technologies. For example, data, instructions, commands, information, signals, bits, symbols, chips, etc. that may be referred to throughout the above description may be represented by voltages, currents, electromagnetic waves, magnetic fields or magnetic particles, optical fields or photons, or any combination thereof.

It should be noted that terms described in this disclosure and terms necessary to understand this disclosure may be replaced with terms having the same or similar meaning. For example, at least one of the channel and the symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station may house one or more (For example, three) cells, also referred to as sectors. In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a portion or the entire coverage area of at least one of a base station and a base station subsystem performing communication services in this coverage.

In the present disclosure, the terms "mobile station (Mobile Station: MS)", "user terminal", "user equipment (User Equipment: UE)", "terminal" and the like can be used interchangeably.

A mobile station may be referred to by one skilled in the art as a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, planes, etc.), an unmanned mobile body (Drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal). For example, each aspect/embodiment of the present disclosure may be applied to a configuration in which communication between a base station and a mobile station is replaced with communication between a plurality of mobile stations (For example, it may be called Device-to-Device (D2D), Vehicle-to-Everything (V2X), etc.). In this case, the mobile station may have the function of the base station. In addition, words such as "up" and" down " may be replaced with words corresponding to communication between terminals (For example, "side".). For example, terms an uplink channel, a downlink channel, or the like may be read as a side channel.

Similarly, the mobile station in the present disclosure may be read as a base station. In this case, the base station may have the function of the mobile station.

The radio frame may comprise one or more frames in the time domain. Each frame or frames in the time domain may be referred to as a sub-frame.

The subframe may further comprise one or more slots in the time domain. The subframe may be a fixed time length (For example, 1 ms) independent of the numerology.

Pneumerology may be a communication parameter applied to at least one of transmission and reception of a signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may comprise one or more symbols (Orthogonal Frequency Division Multiplexing (OFDM)) symbols, single carrier frequency division multiple access (SC-FDMA) symbols, etc.) in the time domain. A slot may be a unit of time based on the numerology.

A slot may include a plurality of minislots. Each minislot may comprise one or more symbols in the time domain. A minislot may also be called a subslot. A minislot may be composed of fewer symbols than slots. A PDSCH (or PUSCH) transmitted in time units larger than the minislot may be referred to as a PDSCH (or PUSCH) mapping type A. A PDSCH (or PUSCH) transmitted using a minislot may be referred to as a PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be referred to as the transmission time interval (TTI), a plurality of consecutive subframes may be referred to as TTI, and one slot or one minislot may be referred to as TTI. That is, at least one of the sub-frame and TTI may be a sub-frame (1 ms) in the existing LTE, a period shorter than 1 ms (For example, 1 -13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (That is, one or more slots or one or more minislots) may be the minimum time unit for scheduling. The number of slots (minislot number) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. A TTI shorter than a normal TTI may be referred to as a shortened TTI, a short TTI, a partial or fractional TTI, a shortened subframe, a short subframe, a minislot, a subslot, a slot, or the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and the frequency domain, and may include one or more continuous subcarriers in the frequency domain. The number of subcarriers included in RB may be, for example, twelve, and the same regardless of the topology. The number of subcarriers included in the RB may be determined based on the neurology.

The time domain of the RB may also include one or more symbols and may be one slot, one minislot, one subframe, or one TTI in length. The one TTI, one subframe, and the like may each comprise one or a plurality of resource blocks.

The one or more RBs may be referred to as a physical resource block (PRB), a sub-carrier group (SCG), a resource element group (REG), a PRB pair, an RB pair, or the like.

The resource block may comprise one or more resource elements (REs). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB based on the common reference point of the carrier. PRB may be defined in BWP and numbered within that BWP.

BWP may include UL BWP (UL BWP) and DL BWP (DL BWP). One or more BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes contained in a radio frame, the number of slots per subframe or radio frame, the number of minislots contained in a slot, the number of symbols and RBs contained in a slot or minislot, the number of subcarriers contained in an RB, and the number of symbols, symbol length, and cyclic prefix (CP) length in a TTI may be varied in various ways.

The term "connected", "coupled", or any variation thereof, refers to any direct or indirect connection or coupling between two or more elements and may include the presence of one or more intermediate elements between two elements that are "connected" or "coupled" to each other. The coupling or connection between the elements may be physical, logical, or a combination thereof. For example, "connection" may be read as "access". As used in the present disclosure, the two elements may be considered to be "connected" or "coupled" to each other using at least one of one or more electrical wires, cables and printed electrical connections and, as some non-limiting and non-comprehensive examples, electromagnetic energy having wavelengths in the radio frequency region, microwave region and light (both visible and invisible) region.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to elements using the designation "first," "second," etc., as used in this disclosure does not generally limit the amount or order of those elements. Such designations can be used in the present disclosure as a convenient way to distinguish between two or more elements. Thus, references to the first and second elements do not imply that only two elements may be employed therein, or that the first objective element must in some way precede the second element.

In the present disclosure, the used terms "include", "including", and variants thereof are intended to be inclusive in a manner similar to the term "comprising". Furthermore, the term "or" as used in this disclosure is not intended to be an exclusive OR.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" or" decision " may include regarding some action as "judgment " or" decision ". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 Radio communication system
20 NG-RAN
100 gNB
110 Reception unit
120 Transmission unit
130 Control unit
200 UE
210 Radio signal transmission/reception unit
220 Amplifier unit
230 Modulation/demodulation unit
240 Control signal/reference signal processing unit
250 Encoding/decoding unit
260 Data transmission/reception unit
270 Control unit
1001 Processor
1002 Memory
1003 Storage
1004 communication device
1005 Input device
1006 Output device
1007 Bus

## Claims

1. A terminal comprising:
a reception unit that receives a reference signal periodically transmitted from a network;
a transmission unit that transmits a measurement result of the reference signal; and
a control unit that determines whether or not to assume a reception of at least a part of the reference signal based on whether or not a specific condition is satisfied.

2. The terminal according to claim 1, wherein
the specific condition includes a condition defined by one or more operation is performed or not in a specific period, the ore more operation selected from a transmission of uplink data, a transmission of uplink reference signal, a reception of downlink data, a report of reception acknowledgement, and a report of channel status indicator.

3. The terminal according to claim 1 or claim 2, wherein
the control unit performs an action not to assume the reception of at least a part of the reference signal based on a notification received from the network.

4. A base station comprising:
a transmission unit that transmits reference signal periodically,
a reception unit that receives a measurement result of the reference signal; and
a control unit that determines whether or not to assume a reception of at least a part of the measurement result based on whether or not a specific condition is satisfied.

5. A radio communication method comprising:
receiving a reference signal periodically transmitted from a network;
transmitting a measurement result of the reference signal; and
determining whether or not to assume a reception of at least a part of the reference signal based on whether or not a specific condition is satisfied.
